# EUROPÄISCHE PATENTSCHRIFT

(11) **EP 1 279 589 B1**
(45) Veröffentlichungstag und Bekanntmachung des Hinweises auf die Patenterteilung: **03.12.2008**
(21) Anmeldenummer: 02015994.3
(22) Anmeldetag: 18.07.2002
(51) Int. Cl.: B62K 19/46, B62J 1/12

(54) **Motorrad mit einem Fahrersitz**
Motorcycle with a drivers seat
Motocyclette avec un siège conducteur

(30) Priorität: 23.07.2001 DE 10135781
(43) Veröffentlichungstag der Anmeldung: 29.01.2003
(73) Patentinhaber: Bayerische Motoren Werke Aktiengesellschaft, 80809 München (DE)
(72) Erfinder: Mölleken, Ralf, 80807 München (DE)

(56) Entgegenhaltungen:
- DE-A- 2 618 891
- DE-A- 3 301 837
- DE-A- 3 824 680
- US-A- 5 172 788

## Beschreibung

Die Erfindung bezieht sich auf ein Motorrad mit einem Fahrersitz, wie es im Oberbegriff des Hauptanspruchs beschrieben ist.

Bei modernen Motorradbrennkraftmaschinen ist die Ansaugluftführung in Fallstromanordnung ausgeführt. Der Luftsammelbehälter, der durch ein Ansaugrohr mit der notwendigen Außenluft versorgt wird, liegt in einem solchen Fall oberhalb des Motors und leitet die beruhigte Luft in den darrunterliegenden Luftansaugstutzen des Motors.

Unabhängig von einer solcher Fallstromanordnung besteht bei Motorradfahrern vielfach der Wunsch, Gegenstände und persönliche Dinge mitzunehmen. Motorräder können daher mit Gepäcksysteme ausgerüstet werden, die sich heutzutage hauptsächlich auf Koffersysteme an Heckseiten und auf Gepäckbrücken beschränken. Daneben finden noch sogenannte Tankrucksäcke Anwendung, die vor dem Fahrer platziert sind.

Die am Heck des Motorrads angebrachten Koffersysteme verlagern den Fahrzeugschwerpunkt nach hinten. Das kann die Fahreigenschaften des Motorrades negativ beeinflussen, das heißt, das Motorrad neigt zum Flattern oder Pendeln.

Diesen Nachteil zeigen die vor dem Fahrer angeordneten Tankrucksäcke nicht. Jedoch wird durch sie der Gesamtschwerpunkt nach oben verlagert, das wiederum zu einer erhöhten Kippneigung beim Rangieren führt. Des Weiteren ragen sie relativ hoch vor dem Fahrer auf, da von ihnen ein gewisses Mindeststauvolumen gefordert wird. Dies kann die Erreichbarkeit der Bedienelemente am Lenker beeinträchtigen.

Schließlich werden Motorräder zunehmend komfortabler ausgestattet. So werden Audio-Komponenten, wie Radiogeräte, Kassetten- oder CD-Player oder ähnliches gewünscht. Auch Navigationssysteme, die dem Fahrer den Weg weisen, werden zunehmend gefordert.

Die US-A-5 172 788 zeigt ein Motorrad, bei dem ein Luftsammelbehälter eine Einheit mit dem Stauraum bildet. Dabei ist der Luftsammelbehälter im vorderen - in Fahrtrichtung gesehen - Abschnitt des Stauraums angesetzt. In dem Stauraum kann bspw. ein Schutzhelm untergebracht werden. Der Stauraum selbst wird durch einen klappbaren Fahrersitz verschlossen.

Aus der DE-A-38 24 680 ist ebenfalls ein Motorrad bekannt, das einen Stauraum für einen Schutzhelm oder dergleichen und einen hinter dem Stauraum angeordneten Luftsammelbehälter vorsieht. Der Stauraum ist wiederum mit einem Deckel verschließbar.

Aufgabe der Erfindung ist es, ein gattungsgemäßes Motorrad im Bereich des Luftsammelbehälters so zu gestalten, dass es weiteren Gestaltungsfreiraum für die Unterbringung von zusätzlichen Gegenständen bietet.

Die Aufgabe wird erfindungsgemäß mit den kennzeichnenden Merkmalen des Anspruchs 1 gelöst.

Nach der Erfindung ist demnach der oberhalb der Brennkraftmaschine liegende Luftsammelbehälter so geformt, dass er einen Stauraum innerhalb der Karosserie bietet. Dieser Stauraum kann von oben zugänglich sein, so dass sich in ihm ein Gepäckstück, wie bspw. ein herkömmlicher Tankrucksack eingelegen und befestigen lässt. Vorteilhaft ist es dabei, den Rucksack in seiner Form und Gestalt dem Stauraum anzupassen. Er kann so zu einem harmonischen Gesamteindruck der Motorradkarosserie in diesem Bereich beitragen.

Stellt der Fahrer das Motorrad ab und nimmt er den Tankrucksack aus dem Stauraum heraus, kann er dort im Gegenzug seinen Schutzhelm unterbringen und gegebenenfalls gegen Diebstahl sichern.

Der Stauraum lässt sich andererseits auch für die Aufnahme von unterschiedlichen Aggregaten herrichten, sei es für die erwähnten Audiokomponenten, ein Navigationssystem oder sonstige Zubehörteile.

In jedem Falle erlaubt der so gewonnene Stauraum eine optimale Ausnutzung des beim Motorrad vorhandenen geringen Bauraums. Außerdem tragen die Gegenstände, die sich in dem im Gegensatz zum herkömmlichen Tankrucksack tief liegenden Stauraum befinden, zu einer Absenkung des Gesamtschwerpunktes des Fahrzeuges und zu dem daraus resultierenden günstigeren Fahrverhalten und Handling bei.

Vorteilhafte Ausgestaltungen der Erfindung ergeben sich aus der nachfolgenden Beschreibung anhand der dazugehörenden Zeichnung.

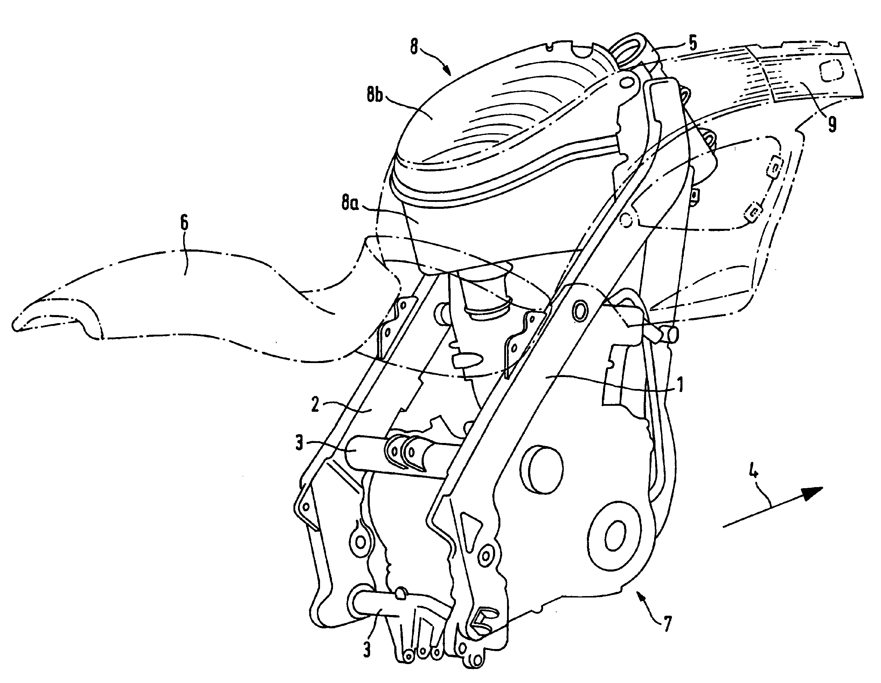

Die Zeichnung zeigt in der **einzigen Figur** bruchstückhaft und in perspektivischer Ansicht Teile eines Motorrades. Es ist ein sogenannter Brückenrahmen erkennbar, der im wesentlichen aus zwei schräg nach unten im Abstand zueinander verlaufenden Längsträger 1 und 2 besteht, die durch mehrere Querträger 3 mit einander verbunden sind. Die Längsträger 1, 2 laufen in Fahrtrichtung - mit dem Pfeil 4 gekennzeichnet - gesehen vorne zusammen und sind dort mit einem Lenkkopf 5 verschweißt. Der Lenkkopf 5 nimmt die nicht näher dargestellte Radaufhängung eines Vorderrades auf.

Ein Fahrersitz 6 ist in der Figur aus Gründen der Übersichtlichkeit durchscheinend dargestellt. Er ist in der üblichen Weise, in der Zeichnung nicht erkennbar, an rahmenfesten Bauteilen befestigt. Wiederum in Fahrtrichtung 4 gesehen, ist vor und unterhalb des Fahrzeugsitzes 6 eine mit dem Fahrzeugrahmen verbundene Brennkraftmaschine 7 angeordnet. Oberhalb der Brennkraftmaschine 7 und vor dem Fahrzeugsitz 6 befindet sich ein Luftsammelbehälter 8. Er besteht als integrales Bauteil aus zwei Abschnitten, nämlich einem geschlossenen Hohlraum 8a und einem darüber aufgesetzten schalenartigen Fortsatz 8b. Der Hohlraum 8a weist eine nicht erkennbare Luftzuführung auf, über die die Außenluft angesaugt wird. Die Luft wird sodann über einen weiteren Luftführungskanal zu einem unterhalb des Luftsammelbehälters 8 liegenden Ansaugstutzen der Brennkraftmaschine 7 abgeleitet.

Verkleidungsteile 9 einer Fahrzeugkarosserie umgeben den Luftsammelbehälter, insbesondere seinen Fortsatz 8b. Der Einfachheit halber zeigt die Zeichnung nur eines dieser Verkleidungsteile und es ist darüber hinaus wiederum durchscheinend dargestellt, um die dahinter liegenden Bauteile erkennen zu lassen. Der schalenartige Fortsatz 8b ist in seiner Form und seinen Dimensionen so gestaltet, dass er mit seinem oberen Rand in etwa mit der oberen Kontur eines Verkleidungsteils 9 der Fahrzeugkarosserie abschließt. Durch seine Schalenausbildung und seine Einbettung in die Verkleidungsteile der Fahrzeugkarosserie formt der Fortsatz 8b einen innenliegenden vertieften Stauraum aus, der in der gezeichneten Ausführung nach oben offen ist.

In diesen Stauraum lassen sich unterschiedliche Gegenstände unterbringen. Im einfachsten Fall sei ein entsprechend gestalteter Tankrucksack erwähnt, der in Schale des Fortsatzes 8b eingelegt und dort gegebenenfalls befestigt wird. An seiner Stelle kann auch ein Schutzhelm des Fahrers Platz finden. Bei entsprechender Ausgestaltung und Formgebung können darüber hinaus in dem Fortsatz 8b verschiedene Aggregate, wie die bspw. bereits erwähnten Audio- oder Navigationssystem untergebracht sein.

## Patentansprüche

1. Motorrad mit einem Fahrersitz (6), einer vor und unterhalb des Fahrersitzes (6) liegenden Brennkraftmaschine (7) und mit einem Luftsammelbehälter (8), der oberhalb der Brennkraftmaschine (7) und vor dem Fahrersitz (6) angeordnet und in umgebende Verkleidungsteile (9) eingebettet ist, **dadurch gekennzeichnet, dass** der Luftsammelbehälter (8) so ausgebildet und in die Verkleidungsteile (9) eingebettet ist, dass sich ein gegenüber der oberen Kontur der Verkleidungsteile (9) innenliegender vertiefter Stauraum ausbildet und dass der Luftsammelbehälter (8) einen geschlossenen Hohlraum (8a) mit einer Luftzuführung und einer Luftableitung zum Ansaugstutzen der Brennkraftmaschine (7) aufweist, auf dem ein nach oben offener und den Stauraum bildender, schalenartiger Fortsatz (8b) angeordnet ist.

## Claims

1. A motorcycle with a driver's seat (6), an engine (7) disposed in front of and under the seat (6), and a plenum chamber (8) disposed above the engine (7) and in front of the seat (6) and embedded in surrounding parts of the fairing (9), **characterised in that** the plenum chamber (8) is constructed and embedded in the fairing parts (9) so as to form an inner stowage space recessed relative to the upper contour of the fairing parts (9), and the plenum chamber (8) comprises a closed cavity (8a) with an air inlet and an air outlet to the air intake of the engine (7), and on which a projection (8b) is disposed, the projection being in the form of a shell, open at the top and constituting the stowage space.

## Revendications

1. Motocyclette comportant un siège de conducteur (6), un moteur à combustion interne (7) situé devant et en dessous du siège (6) ainsi qu'un réservoir collecteur d'air (8) au-dessus du moteur (7), devant le siège de conducteur (6) et entouré de pièces de carénage (9),
**caractérisée en ce que**
le réservoir collecteur d'air (8) est réalisé et installé entre les pièces de carénage (9) de façon à former un volume de rangement situé plus bas et à l'intérieur du contour supérieur des pièces de carénage (9), et
le réservoir collecteur d'air (8) comporte une cavité fermée (8a) munie d'une alimentation en air et d'une sortie d'air vers le collecteur d'admission du moteur à combustion interne (7), volume au-dessus duquel est prévu un prolongement en forme de coquille (8b) ouvert vers le haut et formant le volume de rangement.
